# FASCICULE DE BREVET EUROPEEN

(11) **EP 3 274 438 B1**
(45) Date de publication et mention de la délivrance du brevet: **14.08.2019**
(21) Numéro de dépôt: 16718402.7
(22) Date de dépôt: 23.03.2016
(51) Int. Cl.: C12G 3/06, A23L 17/30

(54) **BOISSON ALCOOLISÉE CONTENANT DES PARTICULES COMPRENANT UN ALIMENT À BASE DE CAVIAR**
ALKOHOLISCHES GETRÄNK MIT PARTIKELN MIT NAHRUNGSMITTEL AUF KAVIARBASIS
ALCOHOLIC BEVERAGE CONTAINING PARTICLES COMPRISING A CAVIAR-BASED FOODSTUFF

(30) Priorité: 26.03.2015 FR 1552524
(43) Date de publication de la demande: 31.01.2018
(73) Titulaire: Pernod Ricard, 75016 Paris (FR)
(72) Inventeur: LELEU, Martine, 91310 Longpont Sur Orge (FR); BARDON, Sébastien, 75016 Paris (FR); CANI, Julie, 13013 Marseille (FR); DELMAS, Thomas, 06410 Biot (FR)
(74) Mandataire: Agasse, Stéphane
(86) Numéro de dépôt international: PCT/FR2016/050639
(87) Numéro de publication internationale: WO 2016/151244

(56) Documents cités:
- WO-A1-2004/056211
- WO-A1-2012/022375
- FR-A1- 2 947 835
- RU-A- 2009 105 932
- US-A1- 2006 280 843

## Description

La présente invention concerne une boisson alcoolisée dans laquelle sont immergées des particules contenant un aliment à base de caviar.

Au sens de la présente invention, on entend par « boisson alcoolisée », une boisson contenant de l'alcool éthylique obtenu par fermentation alcoolique des sucres contenus dans les fruits, les légumes, les céréales, plantes, grains, herbes ou racines qui produisent cet alcool.

Selon le règlement (CE) n°110/2008 du Parlement Européen et du Conseil du 15 janvier 2008 relatif à la définition, la désignation, la présentation, l'étiquetage et la protection des boissons spiritueuses, on définit le titre alcoométrique volumique d'une boisson alcoolisée par le ratio du volume d'alcool pur présent dans la boisson à 20°C sur le volume total de ladite boisson à cette même température. Ce ratio peut être exprimé en pourcentages.

Dans le cadre de la présente invention, on entend par « aliment à base de caviar», tout aliment comprenant du caviar. Il peut s'agir de caviar sauvage, semi-sauvage ou encore d'élevage. Le terme « caviar » est employé dans son sens le plus large. Il désigne non seulement des oeufs de poisson en général (par exemple des oeufs d'esturgeon, de saumon, de truite, de lompe, de hareng, de cabillaud) mais aussi des oeufs d'escargot (caviar d'escargot) ou encore d'un batracien. De préférence, il s'agit du caviar d'esturgeon.

Au cours de développements de nouvelles boissons, on a recherché à incorporer du caviar, aliment réputé luxueux, dans des boissons alcoolisées. Cependant, cette incorporation doit être réalisée d'une manière appropriée pour que les boissons alcoolisées ainsi obtenues conservent les propriétés organoleptiques connues du caviar, voire même qu'elles développent un parfum et une saveur agréablement inédits et sans arrière-goût désagréable ou mauvaise odeur.

Ces exigences quant à la conservation des propriétés organoleptiques et visuelles du caviar dans des boissons alcoolisées sont à l'origine des difficultés pour la mise au point de ces boissons.

De plus, ces difficultés sont accrues du fait de la complexité de la constitution des aliments à base de caviar.

Les oeufs d'esturgeon, et de manière générale les oeufs de poisson ou batracien sont des éléments complexes contenant entre autres de l'eau, des protéines mais aussi des lipides, des vitamines et des minéraux. Ces constituants variés faisant partie de la composition des oeufs de poisson ou de batracien rendent ces aliments difficiles à manipuler, et notamment lorsqu'on souhaite les ajouter dans une boisson, en particulier dans une boisson alcoolisée.

La mise en suspension directe de caviar dans une boisson alcoolisée telle que la vodka entraîne une dégradation rapide de la structure du caviar.

Certains composés du caviar sont très solubles dans l'eau, et diffusent donc facilement en milieu aqueux. Les protéines du caviar précipitent dans l'alcool. Les lipides sont partiellement solubles. Ces phénomènes conduisent à la dégradation visuelle rapide du caviar dans une boisson alcoolisée. Les oeufs se flétrissent, cassent et leur contenu diffuse dans la boisson alcoolisée qui prend un ton blanc-laiteux.

Par ailleurs, l'encapsulation de caviar dans une membrane à base de polymère gélifiant telle qu'une membrane d'alginate ne permet pas de stopper la précipitation de ses protéines et entraîne ainsi le durcissement de l'oeuf. La membrane d'alginate permet certes d'empêcher en partie la fuite de l'oeuf hors de ladite membrane, mais elle n'assure pas d'étanchéité totale. L'oeuf se durcit, sa membrane devient blanchâtre et des filaments blancs diffusent à travers la membrane dans la boisson alcoolisée. Ainsi, l'encapsulation de caviar, par exemple avec une membrane à base de polymère gélifiant, se heurte à des difficultés et nécessite une certaine optimisation.

En outre, l'ajout dans une boisson alcoolisée d'un jus de caviar qui est issu de la rupture de la membrane des oeufs provoque la précipitation des protéines qu'il contient et qui forment alors des particules ou des amas denses. La boisson prend une teinte blanche-laiteuse et devient trouble. En effet, le jus de caviar est sensible à l'eau et à l'alcool.

De plus, l'encapsulation de jus de caviar dans une membrane gélifiante telle qu'une simple membrane d'alginate ne permet pas de conserver encapsulées les molécules de taille inférieure à 20 nm que contient le jus de caviar. Ces molécules trop petites diffusent et crée un trouble dans la boisson alcoolisée dans laquelle elles ont été immergées.

Ainsi, ni le caviar (autrement dit les oeufs d'un poisson ou d'un batracien), ni le jus de caviar provenant de la rupture de la membrane des oeufs ne s'avèrent être des constituants exploitables en tant que tels pour leur incorporation soit directement, soit sous forme encapsulée par exemple avec une membrane à base d'un polymère gélifiant, dans des boissons alcoolisées. En effet, leur comportement vis-à-vis de l'alcool ne permet pas, non plus, leur exploitation directe.

Par ailleurs, on connaît la demande de brevet FR 2 947 835 A1 qui décrit un procédé de fabrication d'une boisson alcoolisée comprenant les étapes suivantes :
- une macération d'une solution alcoolisée avec un caviar pendant une période de temps prédéterminée ;
- une dilution de ladite solution alcoolisée macérée par de l'eau ;
- une distillation de ladite solution macérée préalablement diluée par de l'eau pour obtenir un distillat alcoolique comprenant de l'huile essentielle de caviar.

Ce procédé décrit dans la demande FR 2 947 835 A1 permet d'extraire et de concentrer les parfums et les saveurs du caviar dans des solutions alcoolisées, sans perdre ni le pourcentage volumique d'alcool, ni les subtilités du parfum et de la saveur de cet aliment. La boisson alcoolisée ainsi obtenue par ce procédé délivre au nez un parfum du caviar ayant macéré et au palais un goût de cet aliment comme si on venait d'en manger.

Il convient cependant de noter que le procédé décrit dans la demande FR 2 947 835 A1 épure une grande partie de cette matière première qu'est le caviar pour n'en conserver que les molécules aromatiques volatiles qui sont ainsi présentes dans la boisson alcoolisée. Ainsi, ce procédé n'a pas à tenir compte des réactions d'instabilité de certains des constituants non volatils du caviar aussi connus pour leurs problèmes de vieillissement, d'oxydation et de mauvaise odeur et qui ont été mentionnés ci-dessus, étant donné qu'il les élimine. En effet, le distillat obtenu à l'issue du procédé de la demande FR 2 947 835 A1 ne contient pas ces composés du caviar qui sont problématiques.

Cependant, avec le procédé décrit dans la demande FR 2 947 835 A1, l'apparence et la texture de cet aliment de luxe qu'est le caviar ne sont nullement conservées. Ainsi, la boisson alcoolisée obtenue à l'issue de ce procédé ne comprend pas de caviar en suspension. Cela contribue à diminuer considérablement l'attrait pour cette boisson alcoolisée parfumée au caviar.

La demande US 2006/280843 A1 décrit un matériau de charge (par exemple un complément alimentaire) pour un récipient de boisson pressurisée. Ce matériau de charge est situé dans un contenant qui comprend au moins un compartiment, ledit contenant étant situé dans ledit récipient de boisson et est conçu pour mélanger le matériau de charge, immédiatement après l'ouverture du récipient de boisson, dans la boisson qui entoure le contenant.

Les inventeurs de la présente invention ont cherché à mettre au point une boisson alcoolisée contenant un aliment à base de caviar qui se distingue de la boisson alcoolisée obtenue par le procédé décrit dans la demande FR 2 947 835 A1, du fait que non seulement cette boisson conserve les propriétés gustatives du caviar, mais qu'en outre et surtout elle maintienne les propriétés visuelles (autrement dit l'apparence) et la texture du caviar.

Les inventeurs de la présente invention ont ainsi élaboré de nouvelles particules contenant un aliment à base de caviar, ainsi qu'une boisson alcoolisée qui contient ces particules.

Les particules selon l'invention miment parfaitement la texture, le goût et l'apparence du caviar. Pour ce faire, les inventeurs ont surmonté toutes les difficultés rappelées ci-dessus inhérentes aux constituants complexes et variés des aliments à base de caviar.

La présente invention a pour premier objet une particule qui se caractérise en ce qu'elle comprend au moins un réseau gélifié d'au moins un polysaccharide gélifiant dans lequel sont enchâssés au moins :
- un aliment à base de caviar,
- un agent de renforcement du réseau gélifié du polysaccharide gélifiant et qui est résistant à l'alcool,
- de l'eau, de préférence de l'eau purifiée.

En d'autres termes, la particule selon l'invention encapsule un aliment à base de caviar. Plus précisément, dans la particule selon l'invention, l'aliment à base de caviar est encapsulé dans le réseau gélifié du polysaccharide gélifiant.

Le réseau gélifié du polysaccharide gélifiant comprend un ensemble de chaînes de macromolécules, lesdites chaînes macromoléculaires sont à l'état gélifié.

De préférence, l'aliment à base de caviar est un jus de caviar.

Par « jus de caviar », on entend dans le cadre de la présente invention le jus qui est issu de la rupture de la membrane des oeufs d'un poisson, d'escargots ou encore d'un batracien tels que détaillés ci-dessus. Cette rupture de la membrane des oeufs peut résulter du procédé de traitement et de nettoyage des oeufs de caviar ou bien intervenir de façon volontaire pour obtenir un jus de caviar.

De manière avantageuse, le jus de caviar a été obtenu à partir d'un caviar dont la viscosité est comprise entre 500 et 5000 Cps, de préférence entre 1000 et 3000 Cps. De manière tout à fait avantageuse, la viscosité du caviar est d'environ 1500 Cps.

Le jus de caviar dans la composition des particules selon l'invention présente l'avantage de conserver les qualités visuelles et organoleptiques du caviar tout en s'adaptant, du fait de sa forme liquide, aux contraintes du procédé de fabrication desdites particules qui est décrit ci-après et qui repose sur la technique du milli-fluidique.

Les inventeurs ont ainsi exploité les propriétés connues de formation du réseau de chaînes macromoléculaires d'un polysaccharide gélifiant pour structurer et contenir du jus de caviar.

Comme cela a été expliqué ci-dessus, l'encapsulation du jus de caviar dans des particules d'un polymère gélifiant permet certes d'avoir des particules ayant l'apparence du caviar, mais ces particules ne sont pas stables lorsqu'elles sont immergées dans une boisson alcoolisée.

De manière surprenante, les inventeurs ont découvert que la présence d'un agent de renforcement du réseau gélifié du polysaccharide gélifiant et qui est en outre résistant à l'alcool dans la composition de particules encapsulant un aliment à base de caviar permet de maintenir l'apparence desdites particules lorsqu'elles sont immergées dans une boisson alcoolisée, ainsi que le rendement de formation desdites particules, et ce en diminuant la quantité et la taille des particules satellites lors de la fabrication desdites particules. En d'autres termes, la présence de cet agent de renforcement du réseau gélifié et qui est résistant à l'alcool dans la composition des particules selon l'invention permet de mieux contrôler leur production.

Dans la composition des particules selon l'invention, l'agent de renforcement du réseau gélifié du polysaccharide gélifiant et qui est résistant à l'alcool a une fonction d'épaississant et il contribue ainsi à ce que lesdites particules selon l'invention ne se rétractent pas lorsqu'elles sont immergées dans une boisson alcoolisée.

De préférence, le polysaccharide gélifiant est choisi parmi les polysaccharides gélifiants réactifs aux cations.

Dans le cadre de la présente invention, on entend par "polysaccharide réactif aux cations", un polysaccharide gélifiant susceptible de passer d'un état liquide dans une solution aqueuse à un état gélifié sous l'effet d'un contact avec une solution contenant des ions de charge positive tels que les ions calcium, sodium et magnésium.

Le polysaccharide gélifiant peut être choisi parmi les sels d'alginate tel que les alginates de sodium ou les alginates de potassium, les gellanes, les carraghénanes, les pectines, la gélatine et l'agar-agar. Il peut s'agir d'un de ces composés pris seul ou en mélange.

De manière préférée, le polysaccharide gélifiant est un alginate de sodium. Il est connu que les propriétés structurelles de l'alginate de sodium lui permettent de former un réseau dense et résistant.

L'alginate comprend essentiellement deux monomères que sont l'acide alpha-L-guluronique et l'acide bêta-D-mannuronique.

Préférentiellement, le grade de l'alginate de sodium est choisi de manière appropriée de telle sorte que ledit alginate a une teneur massique en l'acide alpha-L-guluronique qui est supérieure à 50%, plus préférentiellement supérieure à 60% et encore plus préférentiellement supérieure à 65%. Ainsi, de manière préférée, l'alginate de la composition des particules selon l'invention présente une teneur massique en acide alpha-L-guluronique qui est supérieure à celle de l'acide bêta-D-mannuronique. Le réseau gélifié d'un tel alginate présente l'avantage d'être résistant ; ce qui contribue aussi à ce que les particules selon l'invention ne se rétractent pas lorsqu'elles sont immergées dans une boisson alcoolisée.

Avantageusement, l'alginate de sodium a une masse molaire moyenne supérieure à 65 000. Un tel alginate de sodium présente un réseau gélifié résistant.

Dans un mode de réalisation avantageux de l'invention, l'alginate a une teneur massique en acide alpha-L-guluronique supérieure à 50% et une masse molaire moyenne supérieure à 65 000.

L'agent de renforcement du réseau gélifié du polysaccharide gélifiant et qui est résistant à l'alcool peut être choisi parmi l'hydroxypropylmethylcellulose (ci-après abrégée « HPMC»), la carboxy-méthyl-cellulose, la gomme de guar, xanthane ou encore de caroube. Il peut s'agir d'un de ces composés pris seul ou en mélange.

De manière préférée, l'agent de renforcement du réseau gélifié du polysaccharide gélifiant et qui est résistant à l'alcool est l'HPMC.

L'HPMC est un polymère semi-synthétique du type éther de cellulose. Ses propriétés émulsifiantes, épaississantes et suspensives couplées à son inertie dans des solutions ioniques et hydro-alcooliques rendent ce polymère particulièrement approprié pour renforcer le réseau gélifié du polysaccharide gélifiant dans les particules selon l'invention.

De plus, l'HPMC présente l'avantage d'être très résistant à l'alcool comparativement au polysaccharide gélifiant qui peut être de l'alginate de sodium et dont le gel se rétracte s'il est immergé dans une solution hydro-alcoolique telle qu'une boisson alcoolisée.

Dans les particules selon l'invention, l'HPMC renforce le réseau gélifié des chaînes macromoléculaires du polysaccharide gélifiant de telle sorte que lorsque lesdites particules sont immergées dans une boisson alcoolisée, elles conservent leur sphéricité et ne se rétractent pas. En d'autres termes, l'HPMC permet de maintenir la cohésion des constituants et la forme des particules selon l'invention, et ce même lorsqu'elles sont immergées dans une boisson alcoolisée.

Dans un mode de réalisation de l'invention, au moins un tensioactif alimentaire est en outre enchâssé dans le réseau gélifié du polysaccharide gélifiant.

Dans le cadre de la présente invention, on entend par "tensioactif alimentaire", un composé présentant des propriétés tensioactives, adapté à la préparation de produits alimentaires.

Dans la composition des particules selon l'invention, le tensioactif facilite l'obtention de la forme sphérique desdites particules lors de leur fabrication.

Le tensioactif alimentaire est avantageusement choisi parmi les molécules ayant des propriétés tensioactives et qui sont autorisées dans le domaine alimentaire.

La réglementation européenne concernant les additifs alimentaires classés comme émulsifiants est décrite dans la Directive 89/107/CEE du 21 décembre 1988 et ses modifications ultérieures.

Par exemple, le tensioactif alimentaire peut être choisi parmi les lécithines, les methylcelluloses, les sels d'acides gras ayant pour base le calcium, le magnésium, le potassium, le sodium, les esters lactiques des mono- et diglycérides d'acides gras, les esters citriques des mono- et diglycérides d'acides gras, les esters tartriques des mono- et diglycérides d'acides gras, les esters glycéroliques de l'acide diacetyltartrique et d'acides gras, les esters mixtes acétique et tartrique des mono- et diglycérides d'acides gras, les monoglycérides succinyles, les esters glycéroliques et propylène - glycoliques d'acides gras lactyles, le citrate de stearyle, l'acide cholique, l'hemicellulose de soja, le stéarate de polyoxyethylène 40, le monolaurate sorbitane de poloxyethylène 20, le monooleate de sorbitane polyoxyethylene 80, le monopalmitate de polyoxyéthylène sorbitane, le monostearate de sorbitane polyoxyethylene 20, le tristearate de polyoxyethylène sorbitane, les sels d'ammonium d'acide phosphatidique , la gomme cellulosique reticulee, les sucroesters d'acides gras, les oligoesters de saccharose de type I et de type II, les esters polyglyceroliques d'acides gras, les esters de propylene glycol d'acides gras, le stéaroyl-2-lactylate de sodium, le stéaroyl-2-lactylate de calcium, le monostearate de sorbitane, le monolaurate de sorbitane, le monooleate de sorbitane, le monopalmitate de sorbitane, le stearate de polyoxyethylene 8, le laurylsulfate de sodium, la gomme de cassia, les peptones, le stearoylfumarate de sodium, les mono- et di- glycerides ethoxyles, les esters de methylglycoside d'huile de coco.

Le tensioactif peut être aussi choisi parmi les protéines issues par exemple du blanc d'oeuf, du lait (lactoserum, 3-lactoglobuline, caséine), du soja, de la feuille d'alfalfa, de poissons, ainsi que leurs dérivés et/ou hydrolysats.

De manière préférée, le tensioactif alimentaire est choisi parmi le stearoyl-2-lactylate de sodium, le polysorbate 20 et le polysorbate 80. De manière tout à fait préférée, il s'agit du polysorbate 20.

Dans un mode de réalisation de l'invention, dans ledit réseau gélifié est en outre enchâssé au moins un composé choisi parmi les colorants alimentaires et les antioxydants.

Par exemple, le colorant alimentaire peut être choisi parmi la curcumine, les riboflavines, la tartrazine, le jaune de quinoléine, le jaune orange S, la cochenille, l'acide carminique, l'azorubine, l'amarante, le rouge cochenille A, l'érythrosine, le rouge allura, le bleu patenté, l'indigotine, le carmin d'indigo, le bleu brillant FCF, les complexes cuivre-chlorophylles, les complexes cupriques de chlorophyllines, la chlorophylle, le vert S, le caramel, le caramel sulfité, le caramel ammoniacal, le caramel au sulfite d'ammonium, le noir brillant BN, le noir PN, l'encre de seiche, le brun HT, le rocou, la bixine, la norbixine, l'extrait de paprika, la capsanthine, la capsorubine, le lycopène, le β-apocaroténal-8', la lutéine, la canthaxanthine, le rouge de betterave, la bétanine, les anthocyanes, le dioxyde de titane, l'oxyde et l'hydroxyde de fer, l'aluminium, l'argent, l'or, le lithol rubine, les extraits végétaux aromatiques, les jus de fruits et de légumes à contribution colorante.

De manière préférée, le colorant est du noir de carbone ou de l'encre de seiche, pris seul ou en mélange.

Les antioxydants sont choisis parmi les antioxydants autorisés dans le domaine de l'alimentaire. Par exemple, l'antioxydant peut être choisi parmi l'acide ascorbique, les ascorbates de sodium ou de calcium, l'acide diacétyl 5-6-1-ascorbique, l'acide palmityl 6-1-ascorbique, le butylhydroxyanisol, le butylhydroxytoluol, les gallates d'octyle ou de dodécyle, les tocophérols, l'alpha-tocophérol de synthèse, le gamma-tocophérol de synthèse ou le delta-tocophérol de synthèse, l'ensemble des tocophérols constituant la vitamine E, les extrait de lycopènes ou de bêta-carotène, les extrait végétaux riches en polyphénols et/ou en flavonoïdes, les tanins sont extraits le cacao, le café, le thé, le raisin, le romarin, les anthocyanes et les acides phénoliques.

La particule peut comprendre en pourcentages massiques :
- entre 0,5% et 25%, de préférence entre 5% et 15%, d'au moins un aliment à base de caviar ;
- entre 0,5% et 3%, de préférence entre 1% et 2%, d'au moins un polysaccharide gélifiant ;
- entre 0,015% et 1%, de préférence entre 0,05% et 0,3%, d'au moins un agent de renforcement du réseau gélifié du polysaccharide gélifiant et qui est résistant à l'alcool ;
- entre 70% et 98%, de préférence entre 80% et 95%, d'eau et plus préférentiellement d'eau purifiée ;
- optionnellement jusqu'à 3%, de préférence entre 0,00001 % et 3 %, plus préférentiellement entre 0,1% et 2%, d'au moins un tensioactif alimentaire ;
- optionnellement jusqu'à 1%, de préférence jusqu'à 0,5%, plus préférentiellement entre 0,05% et 0,1%, d'au moins un composé choisi parmi les colorants alimentaires et les antioxydants.

Dans un mode de réalisation préféré de l'invention, la particule comprend en pourcentages massiques :
- 12,5% d'au moins un aliment à base de caviar ;
- 1,2% d'au moins un polysaccharide gélifiant ;
- 0,15% d'au moins un agent de renforcement du réseau gélifié du polysaccharide gélifiant et qui est résistant à l'alcool ;
- 0,2% d'au moins un tensioactif alimentaire ;
- Qsp 100% d'eau, de préférence d'eau purifiée.

Plus préférentiellement, la particule selon l'invention comprend en pourcentages massiques :
- 12,5% de jus de caviar ;
- 1,2% d'alginate de sodium ;
- 0,15% d'HPMC ;
- 0,2% de polysorbate 20 ;
- Qsp 100% d'eau purifiée.

De manière avantageuse, le diamètre des particules selon l'invention est compris entre 1 mm et 10 mm, de préférence entre 1,5 mm et 5 mm, encore plus préférentiellement d'environ 2,5 mm.

Les particules selon l'invention présentent une structure monophasique avec un coeur rempli d'un aliment à base de caviar, tel que du jus de caviar.

La densité des particules selon l'invention est avantageusement supérieure à 1.

Les particules selon l'invention ont une odeur et un goût caractéristiques du caviar. Leur texture est ferme mais fondante.

La présente invention a aussi pour objet une boisson alcoolisée qui comprend des particules selon l'invention.

De manière avantageuse, le titre alcoométrique volumique de la boisson alcoolisée selon l'invention exprimé en pourcentages est avantageusement d'au moins 1,2%, de préférence compris entre 15% et 96%, plus préférentiellement compris entre 15% et 70%.

La boisson alcoolisée peut être une boisson choisie parmi la vodka, le gin, la tequila, le mescal, la grappa, le rhum, le whisky, le calvados, le saké, le baijiu, les vins, les boissons comprenant du vin, les boissons obtenues à partir de constituants fermentés d'origine végétale, prise seule ou en mélanges. De manière préférée, la boisson alcoolisée est une vodka.

De manière avantageuse, la boisson alcoolisée selon l'invention comprend, en pourcentages massiques, entre 0,5% et 50%, de préférence entre 2% et 10%, de particules selon l'invention.

Les particules selon l'invention encapsulant un aliment à base de caviar, facilitent la diffusion des arômes de caviar, et ce sans la dispersion de l'aliment à base de caviar dans la boisson alcoolisée.

En effet, lorsque les particules selon l'invention sont immergées dans une boisson alcoolisée, seuls les arômes de caviar s'échappent des particules et se diffusent dans toute la boisson alcoolisée.

Cela procure à la boisson alcoolisée l'odeur et le goût du caviar et l'aliment à base de caviar demeure enchâssé dans les chaînes macromoléculaires du réseau gélifié du polysaccharide gélifiant. Le réseau des chaînes macromoléculaire du polysaccharide gélifiant empêche la diffusion des particules solides de l'aliment à base de caviar hors de la particule selon l'invention.

De plus, comme expliqué ci-dessus, grâce au réseau gélifié du polysaccharide gélifiant dont la résistance est renforcée grâce à l'agent de renforcement que les particules selon l'invention comprennent, lesdites particules immergées dans une boisson alcoolisée ne se déforment pas, conservent leur sphéricité et leur contenu ne fuit pas au travers desdites particules.

Les particules selon l'invention qui sont donc remplies d'un aliment à base de caviar (ou autrement dit qui encapsulent un aliment à base de caviar) présentent un aspect visuel très similaire à celui du caviar.

Ainsi, les particules immergées dans la boisson alcoolisée selon l'invention imitent parfaitement le caviar aussi bien de par leur apparence que de manière gustative.

La boisson alcoolisée contenant les particules contenant un aliment à base de caviar selon l'invention présente en outre l'avantage d'avoir une transparence visuellement identique à la boisson alcoolisée dépourvue de ces particules.

La présente invention a aussi pour objet un récipient rempli d'une boisson alcoolisée selon l'invention telle que décrite ci-dessus (à savoir une boisson alcoolisée qui contient des particules selon l'invention). Par exemple, le récipient peut avoir la forme d'une bouteille ou bien d'une carafe. Le récipient se caractérise en ce qu'il comprend en outre un contenant configuré pour maintenir les particules selon l'invention en suspension dans ledit récipient (ou autrement dit à une hauteur déterminée dans ledit récipient).

On dispose les particules selon l'invention dans ledit contenant et on obtient ainsi un récipient rempli d'une boisson alcoolisée et dans lequel les particules sont maintenues en suspension grâce audit contenant. Le contenant peut comporter des moyens de fixation qui sont configurés pour maintenir le contenant à une hauteur déterminée dans le récipient.

Le contenant peut présenter des formes géométriques très variées, par exemple une forme générale sphérique, parallélépipédique ou ovoïde. Le contenant peut ainsi être une cage, un panier ou bien encore une corbeille, qui est configuré pour recevoir les particules selon l'invention et les maintenir en suspension dans le récipient rempli d'une boisson alcoolisée.

La présente invention a aussi pour objet un procédé de fabrication de particules encapsulant au moins un aliment à base de caviar qui comprend au moins les étapes suivantes :
a) on dissout et hydrate au moins un polysaccharide gélifiant dans de l'eau, de préférence de l'eau purifiée, de manière à obtenir une solution ;
b) on ajoute, sous agitation, dans cette solution, au moins un agent de renforcement du réseau gélifié du polysaccharide gélifiant et qui est résistant à l'alcool, optionnellement au moins un composé choisi parmi les tensioactifs alimentaires, les colorants alimentaires et les antioxydants, et au moins un aliment à base de caviar de manière à obtenir une pâte visqueuse ;
c) on forme des gouttes en faisant passer la pâte visqueuse obtenue à l'étape b) dans un dispositif configuré pour la formation de gouttes à partir de ladite pâte visqueuse ;
d) on immerge les gouttes obtenues à l'étape c) dans une solution gélifiante de manière à former des particules ;
e) on récupère les particules ainsi formées.

Optionnellement, avant de récupérer les particules, on les rince et on les égoutte.

L'aliment à base de caviar, le polysaccharide gélifiant et l'agent de renforcement du réseau gélifié du polysaccharide et qui est résistant à l'alcool peuvent être choisis parmi ceux qui ont été décrits ci-dessus.

De manière préférée, l'aliment à base de caviar est du jus de caviar.

A l'étape b), l'aliment à base de caviar est de manière avantageuse ajouté en dernier à la solution.

De manière optionnelle, à l'étape b), on peut ajouter dans la solution des composés choisis parmi les tensioactifs alimentaires, les colorants alimentaires et les antioxydants qui ont été décrits ci-dessus.

De manière avantageuse, les constituants et leurs quantités respectives sont choisies de manière déterminée pour que la pâte visqueuse obtenue à l'issue de l'étape b) présente une viscosité comprise 1 000 et 7 000 Cps, de préférence entre 1 500 et 5 000 Cps, et encore plus préférentiellement d'environ 1700 Cps. Une telle viscosité de la pâte visqueuse est particulièrement adéquate pour la formation au cours de l'étape d) de particules selon l'invention présentant une forme et une taille très similaires à celles du caviar.

Le pourcentage massique du polysaccharide gélifiant qui a été dissout dans de l'eau à l'étape a) est choisi de manière déterminée pour contrôler la viscosité de la pâte visqueuse obtenue à l'étape b) et ainsi former au cours de l'étape d) des particules présentant une forme quasi-sphérique et non pas des particules sous forme de gouttes qui n'auraient donc pas l'aspect visuel du caviar.

L'étape b) est avantageusement réalisée sous agitation mécanique.

Au cours de l'étape b), le réseau de chaînes macromoléculaires du polysaccharide gélifiant intègre directement l'aliment à base de caviar, et ce donc avant la gélification du polysaccharide gélifiant par la solution gélifiante de l'étape d).

A l'issue de l'étape b), on obtient une pâte visqueuse qui peut comprendre en pourcentages massiques :
- entre 0,5% et 25%, de préférence entre 5% et 15%, de l'aliment à base de caviar ;
- entre 0,5 % et 3%, de préférence entre 1% et 2%, d'au moins un polysaccharide gélifiant ;
- entre 0,015% et 1%, de préférence entre 0,05% et 0,3%, d'au moins un agent de renforcement du réseau gélifié du polysaccharide gélifiant et résistant à l'alcool ;
- entre 70% et 98%, de préférence entre 80% et 95%, d'eau et plus préférentiellement d'eau purifiée ;
- optionnellement jusqu'à 3%, de préférence entre 0,00001 % et 3 %, plus préférentiellement entre 0,1% et 2%, d'au moins un tensioactif alimentaire.
- optionnellement jusqu'à 0,5% de préférence entre 0,05% et 0,1%, d'au moins un composé choisi parmi les colorants alimentaires et les antioxydants.

L'étape c) de formation de gouttes à partir de la pâte visqueuse est réalisée dans un dispositif de formation de gouttes parfaitement à la portée de l'homme du métier.

Avantageusement, le dispositif est configuré pour former des gouttes de taille comprise entre 1 mm et 10 mm de préférence entre 1,5 mm et 5 mm.

Le dispositif de formation de gouttes est du domaine technique de la milli-fluidique.

Par exemple, le dispositif de formation de gouttes est équipé d'une buse au travers de laquelle la pâte visqueuse passe de telle sorte que soient expulsées à une extrémité de ladite buse des gouttes telle que détaillées ci-dessus.

Au cours de l'étape c) de formation de gouttes, la hauteur de chute des gouttes (à savoir la hauteur verticale séparant l'extrémité du dispositif de formation de gouttes d'où est expulsée la goutte de la surface de la solution gélifiante) est choisie de manière appropriée pour former des gouttes de forme sphérique. Ainsi, si la hauteur de chute est trop faible, il peut se former des gouttes de forme allongée et au contraire si la hauteur de chute est trop importante, il peut se former des gouttes de forme aplatie. La détermination de la hauteur de chute des gouttes est parfaitement à la portée de l'homme du métier.

La solution gélifiante de l'étape d) du procédé de fabrication est par exemple une solution aqueuse d'un sel de type XnMm, où X peut être un ion halogénure tel qu'un ion chlorure, un ion tartrate ou bien encore un ion lactate, ou encore un ion gluconate et M est avantageusement un cation d'un alcalino-terreux tel que le calcium, le magnésium ou le sodium, et n et m sont supérieurs ou égaux à 1.

Le pourcentage massique en sel de type XnMm dans la solution gélifiante est avantageusement compris entre 5% et 20%.

Dans un mode de réalisation de l'invention, la solution gélifiante est une solution aqueuse de lactate de calcium. De préférence, l'eau que comprend ladite solution gélifiante est de l'eau purifiée.

Dans un mode de réalisation avantageux de l'invention, la solution gélifiante est une solution comprenant de l'eau purifiée, du lactate de calcium ou du chlorure de calcium. Préférentiellement, la solution gélifiante comprend de l'eau purifiée et du lactate de calcium, la teneur massique en lactate de calcium dans cette solution étant avantageusement de 6%.

Au cours de l'étape d), dès que les gouttes tombent dans la solution gélifiante, elles se solidifient immédiatement du fait que le réseau du polysaccharide gélifiant se forme au contact des ions que comprend la solution gélifiante.

En d'autres termes, dès leur mise en contact avec la solution gélifiante, les molécules du polysaccharide gélifiant passent d'un état où elles étaient libres et désordonnées à un état où elles sont plus ou moins rigides. Il y a donc une transition dans l'ordonnancement de ces molécules.

A l'état gélifié, les chaînes macromoléculaires individuelles du polysaccharide gélifiant forment, avec les cations de la solution gélifiante, un réseau tridimensionnel cohérent qui retient l'aliment à base de caviar et empêche son écoulement hors de la particule.

Dans un mode de réalisation préféré du procédé, le polysaccharide gélifiant est un alginate de sodium et la solution gélifiante est une solution aqueuse de lactate de calcium.

L'alginate est un polymère d'algues brunes (*Laminaria macrocystis*) constitué par la répétition de monomères d'acides D-mannuroniques (bloc M) et alpha L-guluronique (bloc G). Ce polymère est une molécule à longue chaîne chargée négativement par la présence des groupements carboxyles (CO₂⁻). Lors de la gélification de ce polymère, ses charges négatives sont compensées par les ions calcium de la solution gélifiante. Le caractère divalent des ions calcium permet de former un réseau en liant deux chaînes d'alginate. Les blocs G retiennent par coordination les ions calcium. L'agrégation des chaînes parallèles conduit à un assemblage géométrique tridimensionnel régulier appelé "boîte à oeufs" ionoréversible et non thermoréversible. Les blocs G augmentent la plasticité du gel ainsi que la taille des pores. Les blocs M rendent le gel plus élastique et réduise la taille des pores.

Les particules restent immergées dans la solution gélifiante pendant une durée déterminée de telle manière que les ions contenus dans la solution gélifiante aient le temps de diffuser jusqu'au coeur de la particule. Un temps d'immersion trop court dans la solution gélifiante pourrait rendre les particules fragiles et difformes. Le choix de la durée d'immersion des particules dans la solution gélifiante est à la portée de l'homme du métier.

En outre, la durée de gélification a une incidence sur le niveau d'élasticité de la particule selon l'invention.

Une fois les particules obtenues par le procédé tel que décrit ci-dessus, elles peuvent être incorporées dans une boisson alcoolisée.

La présente invention a aussi pour objet une boisson alcoolisée qui contient ces particules susceptibles d'être obtenues par le procédé de fabrication tel que décrit ci-dessus.

La boisson alcoolisée peut être une boisson telle que décrite ci-dessus.

Avantageusement, la boisson alcoolisée comprend, en pourcentages massiques, entre 0,5% et 50%, de préférence entre 2% et 10%, desdites particules susceptibles d'être obtenues par le procédé de fabrication tel que décrit ci-dessus.

Le titre alcoométrique volumique de la boisson alcoolisée est avantageusement d'au moins 1,2%, de préférence compris entre 15% et 96%, plus préférentiellement compris entre 15% et 70%.

### PARTIE EXPERIMENTALE :

### I - Etude de la viscosité de pâtes visqueuses obtenues en faisant varier les teneurs massiques en alginate et en HPMC :

Tout d'abord, on a préparé différentes pâtes visqueuses (essais 1 à 6) en faisant varier les teneurs massiques en HPMC et en alginate de sodium et l'on a mesuré la viscosité des pâtes visqueuses ainsi obtenues.

Les pâtes visqueuses ont été préparées en réalisant les étapes a) à b) du procédé de fabrication de particules qui a été décrit ci-dessus, à savoir :
a) On a préparé une solution en dissolvant de l'alginate de sodium dans de l'eau purifiée.
b) On a ajouté à cette solution sous agitation mécanique de l'HPMC, du polysorbate 20, du charbon végétal et enfin du jus de caviar de manière à obtenir une pâte visqueuse.

Le tableau 1 ci-dessous détaille pour les pâtes visqueuses ainsi obtenues des essais 1 à 6, les teneurs massiques de leurs différents constituants, à savoir :
- alginate de sodium ;
- HPMC;
- polysorbate 20 ;
- jus de caviar;
- charbon végétal ;
- eau purifiée.

Dans les pâtes visqueuses de ces essais 1 à 6, le polysorbate 20 est un tensioactif alimentaire. Le charbon végétal est un colorant utilisé pour colorer la pâte visqueuse.

Le jus de caviar était une émulsion issue de la rupture de la membrane d'oeufs d'esturgeon.

Cette émulsion est plus visqueuse que de l'eau. Elle possède une densité de 1,09 et contient des particules de taille hétérogènes.

Il convient de noter que parmi ces 6 essais, seul l'essai n°5 est un essai qui a abouti à l'obtention d'une pâte visqueuse telle que celle obtenue à l'issue de l'étape b) du procédé de fabrication de particules selon l'invention.

Les autres essais sont des essais comparatifs, puisqu'ils sont dépourvus selon le cas, de jus de caviar, d'HPMC ou encore d'alginate de sodium.

**Tableau 1 : Teneurs massiques des constituants des pâtes visqueuses des essais 1 à 6 et mesure de la viscosité de ces pâtes visqueuses**

| | Essai 1 | Essai 2 | Essai 3 | Essai 4 | Essai 5 | Essai 6 |
|---|---|---|---|---|---|---|
| Alginate de sodium | 1,50% | 1,30% | 0,30% | 0,00% | 1,20% | 1,20% |
| HPMC | 0,00% | 0,20% | 1,20% | 1,50% | 0,15% | 0,00% |
| polysorbate 20 | 0,00% | 0,00% | 0,00% | 0,00% | 0,20% | 0,20% |
| Jus de caviar | 0,00% | 0,00% | 0,00% | 0,00% | 12,50% | 12,50% |
| Charbon végétal | 0,00% | 0,00% | 0,00% | 0,00% | 0,70% | 0,70% |
| Eau | 98,50% | 98,50% | 98,50% | 98,50% | 98,65% | 98,80% |
| Viscosité (Cps) | 1740 | 3220 | 19700 | 21700 | 2860 | 1520 |

Les résultats détaillés dans le tableau 1 démontrent que l'HPMC a un effet texturant sur la pâte visqueuse beaucoup plus important que l'alginate de sodium, car à teneur massique équivalente (par exemple 1,5%), la viscosité de la pâte visqueuse contenant uniquement de l'HPMC (à savoir l'essai n°4) est 12,5 fois supérieure à celle de la pâte visqueuse contenant seulement de l'alginate de sodium (à savoir l'essai n°1). En d'autres termes, l'HPMC renforce la texture (ou autrement dit a un effet épaississant) de la pâte visqueuse.

Cependant, la pâte visqueuse contenant uniquement de l'HPMC (à savoir l'essai n°4) est beaucoup plus élastique et filante que la pâte visqueuse contenant uniquement de l'alginate de sodium (à savoir l'essai n°1). C'est pourquoi, une pâte visqueuse contenant uniquement de l'HPMC ne serait pas appropriée pour la formation de particules selon l'invention.

En comparant les viscosités des pâtes visqueuses des essais 5 et 6 qui contenaient en outre par rapport aux essais 1 à 4, du polysorbate 20, du jus de caviar et du charbon végétal, on relève que la présence de 0,15% d'HPMC dans la composition de la pâte visqueuse a pour effet de quasiment doubler sa viscosité. En effet, la viscosité de la pâte visqueuse de l'essai n°5 est quasi le double de celle de la pâte visqueuse de l'essai n°6 (pâte visqueuse dépourvue de HPMC).

La comparaison de la viscosité des pâtes visqueuses des essais n°5 et 6 témoigne de l'importance de l'HPMC dans les propriétés physiques de la pâte visqueuse obtenue et qui est destinée à être gélifiée dans une solution gélifiante pour l'obtention de particules selon l'invention sphériques.

### Il - Etude de la variation de la teneur massique en alginate de sodium dans des particules de jus de caviar :

On a préparé des particules selon le procédé de fabrication de particules selon l'invention qui a été décrit ci-dessus, à savoir :
a) On a préparé une solution en dissolvant de l'alginate de sodium dans de l'eau purifiée.
b) On a ajouté à cette solution sous agitation mécanique de l'HPMC, du polysorbate 20 et du jus de caviar de manière à obtenir une pâte visqueuse.
c) On a formé des gouttes en faisant passer la pâte visqueuse dans une buse dont le diamètre en sortie de goutte était choisi de manière appropriée pour le diamètre souhaité de particules.
d) On a immergé les gouttes obtenues à l'étape d) dans une solution gélifiante contenant du lactate de calcium et de l'eau purifiée, la teneur massique en lactate de calcium dans ladite solution était de 6%.
e) On a récupéré les particules ainsi formées.

Le tableau 2 ci-dessous détaille pour les pâtes visqueuses des essais 7 à 10 les teneurs massiques de leurs différents constituants, à savoir :
- alginate de sodium ;
- HPMC;
- polysorbate 20 ;
- jus de caviar;
- eau purifiée.

Dans les pâtes visqueuses de ces essais 7 à 10, le polysorbate 20 est un tensioactif alimentaire.

Le jus de caviar était une émulsion issue de la rupture de la membrane d'oeufs d'esturgeon. Cette émulsion est plus visqueuse que de l'eau. Elle possède une densité de 1,09 et contient des particules de taille hétérogènes.

**Tableau 2 : Teneurs massiques des constituants des pâtes visqueuses des essais 7 à 10, hauteur de chute des gouttes et indication de la sphéricité des particules et de la présence ou non de particules satellites**

| | Essai 7 | Essai 8 | Essai 9 | Essai 10 |
|---|---|---|---|---|
| Alginate de sodium | 1,00% | 1,20% | 1,30% | 1,50% |
| polysorbate 20 | 2% | 2% | 2% | 2% |
| HPMC | 0,15% | 0,15% | 0,15% | 0,15% |
| Caviar | 12,50% | 12,50% | 12,50% | 12,50% |
| Eau | 84,35% | 84,15% | 84,05% | 83,85% |
| Hauteur de chute (cm) | 5 | 9 | 12 | 12 |
| Sphéricité des particules | oui | oui | oui | Queue |
| Particules satellites | peu | très peu et minuscules | petites | très peu |

Dans le tableau 2 ci-dessus sont aussi détaillés les éléments suivants pour les essais n° 7 à 10 :
- la hauteur de chute des gouttes au cours de l'étape de formation desdites gouttes (à savoir l'étape d) ci-dessus) ;
- la sphéricité des particules récupérées ;
- la présence ou non de particules satellites parmi les particules récupérées.

Au vu des résultats du tableau 2, on relève que les particules ont une sphéricité acceptable à partir d'une teneur massique de 1,2% d'alginate de sodium.

De plus, on remarque que la quantité et la taille des particules satellites augmentent lorsque le pourcentage d'alginate de sodium diminue.

Afin de déterminer si cette augmentation de la quantité et de la taille des particules satellites était due à l'alginate de sodium ou bien uniquement à la viscosité de la pâte visqueuse, on a effectué deux autres essais (essais n°11 et 12) dans lesquels la teneur massique en HPMC dans la pâte visqueuse n'était plus de 0,15% mais de 0,3%.

Le tableau 3 ci-dessous détaille pour les pâtes visqueuses des essais 11 et 12, les teneurs massiques de leurs différents constituants, à savoir :
- alginate de sodium ;
- HPMC;
- polysorbate 20 ;
- jus de caviar;
- eau purifiée.

Dans le tableau 3 ci-dessus sont aussi détaillés les éléments suivants pour les essais n° 11 et 12 :
- la hauteur de chute des gouttes au cours de l'étape de formation desdites gouttes (à savoir l'étape d) ci-dessus) ;
- la sphéricité des particules récupérées ;
- la présence ou non de particules satellites parmi les particules récupérées.

**Tableau 3 : Teneurs massiques des constituants des pâtes visqueuses des essais 11 et 12, hauteur de chute des gouttes, indication de la sphéricité des particules et de la présence ou non de particules satellites**

| | Essai 11 | Essai 12 |
|---|---|---|
| Alginate de sodium | 1,00% | 1,10% |
| polysorbate 20 | 2% | 2% |
| HPMC | 0,30% | 0,30% |
| Caviar | 12,50% | 12,50% |
| Eau | 84,20% | 84,10% |
| Hauteur de chute (cm) | 9 | 15 |
| Sphéricité | Oui | queues |
| particules satellites | Petites | très peu et minuscules |

L'essai n°11 présente autant de particules satellites que l'essai n°7, mais ces particules satellites sont plus petites. Cependant ces particules satellites sont plus grandes et plus nombreuses que celles des particules de l'essai n°12.

En outre, la présence de 0,1% de plus d'alginate de sodium dans la pâte visqueuse de l'essai n°12 que dans la pâte visqueuse de l'essai n°11 a eu pour effet d'augmenter la viscosité de la pâte visqueuse et de diminuer la taille et la quantité des particules satellites. Cependant, les particules ont perdu leur sphéricité. En effet, les particules de l'essai n°12 ne sont plus sphériques.

Ces essais témoignent qu'il existe donc un équilibre entre la quantité alginate de sodium et l'HPMC dans la composition des particules qui permet de former des particules pleines contenant du jus de caviar en conservant une bonne sphéricité et en minimisant la taille et la quantité des particules satellites.

### III- Etude de la variation de la teneur massique en HPMC dans des particules de jus de caviar :

On a réalisé d'autres particules de jus de caviar de la même manière que pour les essais n° 7 à 12, et ce en fixant le pourcentage massique d'alginate de sodium dans la pâte visqueuse à 1,2% et en faisant varier la teneur massique en HPMC, de manière à déterminer les teneurs massiques optimales en HPMC de particules de jus de caviar.

Le tableau 4 ci-dessous détaille pour les pâtes visqueuses des essais 13 à 15 les teneurs massiques de leurs différents constituants, à savoir :
- alginate de sodium ;
- HPMC;
- polysorbate 20 ;
- jus de caviar;
- eau purifiée.

Dans le tableau 4 ci-dessus sont aussi détaillés les éléments suivants pour les essais n° 13 à 15 :
- la hauteur de chute des gouttes au cours de l'étape de formation desdites gouttes (à savoir l'étape d) ci-dessus) ;
- la sphéricité des particules récupérées ;
- la présence ou non de particules satellites parmi les particules récupérées.

**Tableau 4 : Teneurs massiques des constituants des pâtes visqueuses des essais 13 à 15, hauteur de chute des gouttes, indication de la sphéricité des particules et de la présence ou non de particules satellites**

| | Essai 13 | Essai 14 | Essai 15 |
|---|---|---|---|
| alginate | 1,20% | 1,20% | 1,20% |
| polysorbate 20 | 2% | 2% | 2% |
| HPMC | 0,00% | 0,15% | 0,20% |
| caviar | 12,50% | 12,50% | 12,50% |
| Eau | 84,30% | 84,15% | 84,10% |
| Hauteur de chute (cm) | 5,5 | 9 | 13 |
| Sphéricité | oui | Oui | Oui |
| particules satellites | beaucoup | très peu et minuscules | petites |

Au vu des résultats du tableau 4, l'essai n°13 prouve que l'HPMC permet de diminuer la taille et la quantité des particules satellites. La hauteur de chute, directement corrélée à la viscosité, indique que l'HPMC joue un rôle important dans la viscosité de la pâte visqueuse.

### IV- Etude de la variation de la teneur massique en polysorbate 20 dans des particules de jus de caviar :

Enfin, des essais ont été réalisés en fabriquant des particules de jus de caviar pour lesquels on a fait varier la teneur massique en polysorbate 20 dans la pâte visqueuse, et ce de 2 à 0,2%.

On a constaté qu'en diminuant la teneur massique du polysorbate 20 de 2 à 0,2% dans la pâte visqueuse, cela permettait de diminuer la hauteur de chute des gouttes au cours de l'étape de formation desdites gouttes (à savoir l'étape d) ci-dessus). Pour des raisons d'optimisation de l'utilisation du dispositif de formation de gouttes, on recherche une hauteur de chute de gouttes la plus faible possible mais suffisante pour permettre de former des gouttes sphériques.

De plus, la diminution de la teneur massique en le polysorbate 20 n'a pas eu d'influence sur la viscosité de la pâte visqueuse, car le nombre et la quantité et la qualité des particules sont restés globalement identiques au cours de ces essais complémentaires.

### V - Expérimentations avec des particules selon l'invention mises en solution dans une boisson alcoolisée (vodka) :

Dans le cadre de ces expérimentations, on a utilisé des particules selon l'invention ayant la composition suivante en pourcentages massiques :
- 85,25% d'eau purifiée ;
- 12,5% de jus de caviar ;
- 1,5% d'alginate de sodium ;
- 2% de polysorbate 20 ;
- 0,15% d'HPMC.

Les particules selon l'invention avaient été formées à partir d'une solution gélifiante contenant en pourcentages massiques : 6% de lactate de calcium et 94% d'eau purifiée.

13,8 g de ces particules ont été ajoutées dans une bouteille contenant 345 mL de vodka de manière à obtenir une boisson alcoolisée selon l'invention. Cela équivalait à 20 g de particules contenant 2,5g de jus de caviar dans 500mL de vodka.

La cinétique d'infusion des arômes du jus de caviar dans cette vodka a été estimée journalièrement par analyse sensorielle pendant 12 jours.

L'aspect, l'odeur et le goût ont été évalués sur des échantillons placés à température ambiante, 4°C et à 30°C.

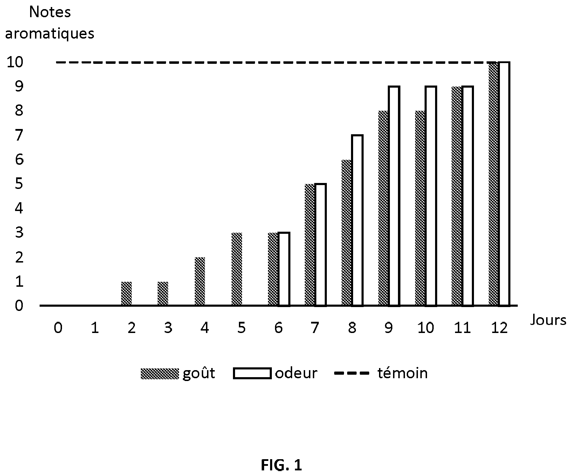

Le graphe de la figure 1 indique le temps de diffusion des arômes du jus de caviar dans la vodka à température ambiante, l'intensité aromatique en goût et en odeur en fonction du temps de macération des particules dans cette vodka selon l'invention.

Les résultats de la figure 1 indiquent une infusion progressive sur les 12 jours. L'odeur de caviar apparaît le 6^{ième} jour. Elle devient plus forte les jours suivants. Le goût apparaît dès le 2^{ième} jour et devient plus intense de jour en jour. Après 12 jours, les échantillons ont l'odeur et le goût de l'échantillon témoin à 5g/L de jus de caviar dans de la vodka.

L'aspect des particules est resté identique au cours du temps à toutes les températures testées.

Il est intéressant de noter que la température a une influence sur la perception et l'infusion du caviar. En effet, l'échantillon maintenu à 4°C présente une infusion ralentie qui se traduit par une odeur et un goût de caviar moins prononcés que le même échantillon resté à température ambiante pendant une durée équivalente. A contrario, l'échantillon maintenu à 30°C infuse plus vite qu'à température ambiante.

Ces résultats témoignent qu'une boisson alcoolisée selon l'invention telle que de la vodka demeure stable au cours du temps et permet la diffusion des arômes de caviar dans ladite boisson sans changement de l'apparence des particules et sans changement de l'apparence visuelle de la limpidité de la boisson.

En outre, on note que la cinétique d'infusion, à température modérée (à savoir entre environ 20 et 25°C) est lente (environ 12 jours).

## Revendications

1. Particule, **caractérisée en ce qu'**elle comprend au moins un réseau gélifié d'au moins un polysaccharide gélifiant dans lequel sont enchâssés au moins :
- un aliment à base de caviar;
- un agent de renforcement du réseau gélifié du polysaccharide gélifiant et qui est résistant à l'alcool ;
- de l'eau, de préférence de l'eau purifiée.

2. Particule selon la revendication 1, **caractérisée en ce que** l'aliment à base de caviar est un jus de caviar.

3. Particule selon la revendication 1 ou 2, **caractérisée en ce que** l'agent de renforcement du réseau gélifié du polysaccharide gélifiant et qui est résistant à l'alcool est l'hydroxypropylmethylcellulose (abrégée « HPMC»).

4. Particule selon l'une quelconque des revendications 1 à 3, **caractérisée en ce que** le polysaccharide gélifiant est choisi parmi les alginates de sodium ou de potassium, les gellanes, les carraghénanes, les pectines, la gélatine et l'agar-agar.

5. Particule selon la revendication 4, **caractérisée en ce que** le polysaccharide gélifiant est un alginate de sodium.

6. Particule selon l'une quelconques des revendications 1 à 5, **caractérisée en ce qu'**au moins un tensioactif alimentaire est en outre enchâssé dans ledit réseau gélifié.

7. Particule selon la revendication 6, **caractérisée en ce que** le tensioactif alimentaire est choisi parmi le stearoyl-2-lactylate de sodium, le polysorbate 20 et le polysorbate 80.

8. Particule selon la revendication 6 ou 7, **caractérisée en ce qu'**elle comprend en pourcentages massiques :
- entre 0,5% et 25%, de préférence entre 5 et 15%, d'au moins un aliment à base de caviar ;
- entre 0,5% et 3%, de préférence entre 1% et 2%, d'au moins un polysaccharide gélifiant ;
- entre 0,015% et 1%, de préférence entre 0,05% et 0,3%, d'au moins un agent de renforcement du réseau gélifié du polysaccharide gélifiant et qui est résistant à l'alcool ;
- entre 70% et 98%, de préférence entre 80% et 95%, d'eau et plus préférentiellement d'eau purifiée ;
- optionnellement jusqu'à 3%, de préférence entre 0,00001 % et 3 %, plus préférentiellement entre 0,1% et 2%, d'au moins un tensioactif alimentaire ;
- optionnellement jusqu'à 1%, de préférence jusqu'à 0,5%, plus préférentiellement entre 0,05% et 0,1%, d'au moins un composé choisi parmi les colorants alimentaires et les antioxydants.

9. Procédé de fabrication de particules encapsulant au moins un aliment à base de caviar, **caractérisé en ce qu'**il comprend au moins les étapes suivantes :
a) on dissout et hydrate au moins un polysaccharide gélifiant dans de l'eau, de préférence de l'eau purifiée, de manière à obtenir une solution ;
b) on ajoute, sous agitation, dans cette solution, au moins un agent de renforcement du réseau gélifié du polysaccharide gélifiant et qui est résistant à l'alcool, optionnellement au moins un composé choisi parmi les tensioactifs alimentaires, les colorants alimentaires et les antioxydants, et au moins un aliment à base de caviar de manière à obtenir une pâte visqueuse ;
c) on forme des gouttes en faisant passer la pâte visqueuse obtenue à l'étape b) dans un dispositif configuré pour la formation de gouttes à partir de ladite pâte visqueuse ;
d) on immerge les gouttes obtenues à l'étape c) dans une solution gélifiante de manière à former des particules ;
e) on récupère les particules ainsi formées.

10. Boisson alcoolisée **caractérisée en ce qu'**elle comprend des particules selon l'une quelconques des revendications 1 à 8 ou fabriquées selon le procédé de fabrication selon la revendication 9.

11. Boisson alcoolisée selon la revendication 10, **caractérisée en ce qu'**elle comprend, en pourcentages massiques, entre 0,5% et 50%, de préférence entre 2% et 10%, de particules selon l'une quelconques des revendications 1 à 8 ou fabriquées selon le procédé de fabrication selon la revendication 9.

12. Boisson alcoolisée selon la revendication 10 ou 11, **caractérisée en ce que** la boisson alcoolisée est choisie parmi la vodka, le gin, la tequila, le mescal, la grappa, le rhum, le whisky, le calvados, le saké, le baijiu, les vins, les boissons comprenant du vin, les boissons obtenues à partir de constituants fermentés d'origine végétale, prise seule ou en mélanges.

13. Récipient rempli d'une boisson alcoolisée et comprenant un contenant configuré pour maintenir des particules à une hauteur déterminée dans ledit récipient, **caractérisé en ce que** ladite boisson alcoolisée est une boisson alcoolisée selon l'une quelconque des revendications 10 à 12 et lesdites particules étant des particules selon l'une quelconque des revendications 1 à 8 ou fabriquées selon le procédé de fabrication selon la revendication 9.

## Patentansprüche

1. Partikel, **dadurch gekennzeichnet, dass** er mindestens ein geliertes Netzwerk mindestens eines gelbildenden Polysaccharids umfasst, in dem mindestens Folgendes eingeschlossen ist:
- ein Nahrungsmittel auf Kaviarbasis;
- ein Verstärkungsmittel des gelierten Netzwerks des gelbildenden Polysaccharids, und das widerstandsfähig gegen Alkohol ist;
- Wasser, vorzugsweise gereinigtes Wasser.

2. Partikel nach Anspruch 1, **dadurch gekennzeichnet, dass** das Nahrungsmittel auf Kaviarbasis Kaviarsaft ist.

3. Partikel nach Anspruch 1 oder 2, **dadurch gekennzeichnet, dass** das Verstärkungsmittel des gelierten Netzwerks des gelbildenden Polysaccharids, und das widerstandsfähig gegen Alkohol ist, Hydroxypropylmethylcellulose (abgekürzt "HPMC") ist.

4. Partikel nach einem der Ansprüche 1 bis 3, **dadurch gekennzeichnet, dass** das gelbildende Polysaccharid ausgewählt ist aus Natrium- oder Kaliumalginaten, Gellanen, Carageenanen, Pektinen, Gelatine und Agar-Agar.

5. Partikel nach Anspruch 4, **dadurch gekennzeichnet, dass** das gelbildende Polysaccharid ein Natriumalginat ist.

6. Partikel nach einem der Ansprüche 1 bis 5, **dadurch gekennzeichnet, dass** mindestens ein Nahrungsmitteltensid außerdem in dem gelierten Netzwerk eingeschlossen ist.

7. Partikel nach Anspruch 6, **dadurch gekennzeichnet, dass** das Nahrungsmitteltensid ausgewählt ist aus dem Natriumstearoyl-2-lactylat, dem Polysorbat 20 und dem Polysorbat 80.

8. Partikel nach Anspruch 6 oder 7, **dadurch gekennzeichnet, dass** er in Massenprozent Folgendes umfasst:
- zwischen 0,5% und 25%, vorzugsweise zwischen 5 und 15% mindestens eines Nahrungsmittels auf Kaviarbasis;
- zwischen 0,5 % und 3 %, vorzugsweise zwischen 1 % und 2 % mindestens eines gelbildenden Polysaccharids;
- zwischen 0,015 % und 1 %, vorzugsweise zwischen 0,05 % und 0,3 % mindestens eines Verstärkungsmittels des gelierten Netzwerks des gelbildenden Polysaccharids, und das widerstandsfähig gegen Alkohol ist;
- zwischen 70 % und 98 %, vorzugsweise zwischen 80 % und 95 % Wasser und bevorzugter gereinigtes Wasser;
- optional bis 3 %, vorzugsweise zwischen 0,00001 % und 3 %, bevorzugter zwischen 0,1 % und 2 % mindestens eines Nahrungsmitteltensids;
- optional bis 1 %, vorzugsweise bis 0,5 %, bevorzugter zwischen 0,05 % und 0,1 % mindestens einer Verbindung, ausgewählt aus Lebensmittelfarbstoffen und Antioxidantien.

9. Verfahren zur Herstellung von Partikeln, die mindestens ein Nahrungsmittel auf Kaviarbasis einkapseln, **dadurch gekennzeichnet, dass** es mindestens die folgenden Schritte umfasst:
a) Lösen und Hydratieren mindestens eines gelbildenden Polysaccharids in Wasser, vorzugsweise gereinigtem Wasser, um eine Lösung zu erhalten;
b) Zugeben, unter Rühren, in diese Lösung mindestens eines Verstärkungsmittels des gelierten Netzwerks des gelbildenden Polysaccharids, und das gegen Alkohol widerstandsfähig ist, optional mindestens einer Verbindung, ausgewählt aus den Nahrungsmitteltensiden, den Nahrungsmittelfarbstoffen und den Antioxidantien, und mindestens eines Nahrungsmittels auf Kaviarbasis, um eine viskose Paste zu erhalten;
c) Bilden von Tropfen, indem die viskose Paste, erhalten in Schritt b), in eine Vorrichtung übertragen wird, die für die Bildung von Tropfen ausgehend von der viskosen Paste konfiguriert ist;
d) Eintauchen der Tropfen, erhalten in Schritt c), in eine gelbildende Lösung, um Partikel zu bilden;
d) Wiedergewinnen der so gebildeten Partikel.

10. Alkoholisches Getränk, **dadurch gekennzeichnet, dass** es Partikel nach einem der Ansprüche 1 bis 8 oder hergestellt nach dem Herstellungsverfahren nach Anspruch 9 umfasst.

11. Alkoholisches Getränk nach Anspruch 10, **dadurch gekennzeichnet, dass** es in Massenprozent zwischen 0,5 % und 50 %, vorzugsweise zwischen 2 % und 10 % Partikel nach einem der Ansprüche 1 bis 8 oder hergestellt nach dem Herstellungsverfahren nach Anspruch 9 umfasst.

12. Alkoholisches Getränk nach Anspruch 10 oder 11, **dadurch gekennzeichnet, dass** das alkoholische Getränk ausgewählt ist aus Wodka, Gin, Tequila, Mescal, Grappa, Rum, Whisky, Calvados, Sake, Baijiu, Weinen, Getränken, umfassend Wein, Getränken, erhalten ausgehend von fermentierten Bestandteilen pflanzlichen Ursprungs, alleine oder in Mischungen.

13. Behälter, der mit einem alkoholischen Getränk gefüllt ist und umfassend ein Gefäß, das konfiguriert ist, um Partikel auf einer bestimmten Höhe in dem Behälter zu halten, **dadurch gekennzeichnet, dass** das alkoholische Getränk ein alkoholisches Getränk nach einem der Ansprüche 10 bis 12 ist und die Partikel Partikel nach einem der Ansprüche 1 bis 8 oder hergestellt nach dem Herstellungsverfahren nach Anspruch 9 sind.

## Claims

1. A particle, **characterized in that** it comprises at least one gelled network of at least one gelling polysaccharide wherein are entrapped at least:
- a caviar-based foodstuff;
- an agent for reinforcing the gelled network of the gelling polysaccharide and which is resistant to alcohol;
- water, preferably purified water.

2. The particle according to claim 1, **characterized in that** the caviar-based foodstuff is a caviar juice.

3. The particle according to claim 1 or 2, **characterized in that** the agent for reinforcing the gelled network of the gelling polysaccharide and which is resistant to alcohol is hydroxypropyl methylcellulose (abbreviated « HPMC »).

4. The particle according to any one of claims 1 to 3, **characterized in that** the gelling polysaccharide is selected from sodium or potassium alginates, gellans, carrageenans, pectins, gelatin and agar-agar.

5. The particle according to claim 4, **characterized in that** the gelling polysaccharide is a sodium alginate.

6. The particle according to any one of claims 1 to 5, **characterized in that** at least one food surfactant is further entrapped in said gelled network.

7. The particle according to claim 6, **characterized in that** the food surfactant is selected from sodium stearoyl-2-lactylate, polysorbate 20 and polysorbate 80.

8. The particle according to claim 6 or 7, **characterized in that** it comprises in weight percent:
- between 0.5% and 25%, preferably between 5% and 15%, of at least one caviar-based foodstuff;
- between 0.5% and 3%, preferably between 1% and 2%, of at least one gelling polysaccharide;
- between 0.015% and 1%, preferably between 0.05% and 0.3%, of at least one agent for reinforcing the gelled network of the gelling polysaccharide and which is resistant to alcohol;
- between 70% and 98%, preferably between 80% and 95%, of water and more preferably of purified water;
- optionally up to 3%, preferably between 0.00001% and 3%, more preferably between 0.1% and 2%, of at least one food surfactant;
- optionally up to 1%, preferably up to 0.5%, more preferably between 0.05% and 0.1%, of at least one compound selected from food colorants and antioxidants.

9. A method for manufacturing particles encapsulating at least one caviar-based foodstuff, **characterized in that** it comprises at least the following steps of:
a) dissolving and hydrating at least one gelling polysaccharide in water, preferably purified water, so as to obtain a solution;
b) adding, under stirring, in this solution, at least one agent for reinforcing the gelled network of the gelling polysaccharide and which is resistant to alcohol, optionally at least one compound selected from food surfactants, food colorants and antioxidants, and at least one caviar-based foodstuff so as to obtain a viscous paste;
c) forming drops by making the viscous paste obtained at step b) pass in a device configured for the formation of drops from said viscous paste;
d) immersing the drops obtained at step c) in a gelling solution so as to form particles;
e) recovering the particles thus formed.

10. An alcoholic beverage **characterized in that** it comprises particles according to any one of claims 1 to 8 or manufactured according to the manufacturing method according to claim 9.

11. The alcoholic beverage according to claim 10, **characterized in that** it comprises, in weight percent, between 0.5% and 50%, preferably between 2% and 10%, of particles according to any one of claims 1 to 8 or manufactured according to the manufacturing method according to claim 9.

12. The alcoholic beverage according to claim 10 or 11, **characterized in that** the alcoholic beverage is selected from vodka, gin, tequila, mescal, grappa, rum, whiskey, calvados, sake, baijiu, wines, beverages comprising wine, beverages obtained from fermented constituents of vegetable origin, taken alone or in mixtures.

13. A vessel filled with an alcoholic beverage and comprising a container configured to hold particles at a predetermined height in said vessel, **characterized in that** said alcoholic beverage is an alcoholic beverage according to any one of claims 10 to 12 and said particles being particles according to any one of claims 1 to 8 or manufactured according to the manufacturing method according to claim 9.
